Europäisches Patentamt

European Patent Office

Office européen des brevets

(11) Publication number: **0 017 437**
**A1**

# EUROPEAN PATENT APPLICATION

(21) Application number: **80300970.3**

(22) Date of filing: **28.03.80**

(51) Int. Cl.³: **G 01 N 1/24**

(30) Priority: **29.03.79 GB 7910985**

(43) Date of publication of application:
**15.10.80 Bulletin 80/21**

(84) Designated Contracting States:
**BE DE FR GB IT NL**

(71) Applicant: **SYBRON CORPORATION**
**1100 Midtown Tower**
**Rochester, NY 14604(US)**

(72) Inventor: **Windemer, Richard Ian**
**1 Rochester Way**
**Crowborough, Sussex(GB)**

(74) Representative: **Crawford, Andrew Birkby et al,**
**A.A. THORNTON & CO. Northumberland House 303-306**
**High Holborn**
**London WC1V 7LE(GB)**

(54) Gas flow and sampling devices and gas monitoring system.

(57) A gas sampling device (50) includes a sampling channel (52) incorporating a Coanda-effect device (90) which is arranged to produce a flow of the gas to be tested through the sampling channel (52). A venturi (69) is provided in the channel upstream of the Coanda-effect device (90) so as to produce a pressure differential between two locations in the channel in response to gas flow therethrough. A testing channel inlet connection (73) communicates by way of an annular filter element (80) with the location which is at the higher pressure and provides a filtered flow path to a gas-testing device. A testing channel outlet connection (74) communicates with the other, lower pressure location to provide a gas return path from the gas testing device.

An improved construction of Coanda-effect device is also disclosed, as is a gas monitoring system incorporating the gas sampling device in combination with a gas duct, such as a flue arrangement.

./...

Croydon Printing Company Ltd.

FIG. 2.

IMPROVED GAS FLOW AND GAS SAMPLING DEVICES

BACKGROUND OF THE INVENTION

(1) Field of the Invention

This invention relates to improved gas flow devices using the Coanda effect and also to improved gas sampling devices that may advantageously be used for extracting for test purposes a continuous sample of a gas which may contain suspended particulate matter.

(2) Description of the Prior Art

In a number of applications, such as flue gas analysis, there is a requirement to sense continuously the condition of a flowing gas. In one continuous sampling device, described in U.S. Patent No. Re 29,209, a continuous flow of gas through a testing apparatus is produced by producing in the apparatus a temperature differential whereby gas is withdrawn from and returned to the main stream by convection. The rate of gas flow thus produced is necessarily slow and the flow must not be obstructed. When this apparatus is used to sample gases contaminated by suspended particles the low flow rate results in deposition of the particles in the test apparatus leading to large and spurious variations in the measured characteristic and frequent cleaning is therefore required. Another problem with such an arrangement is that, due to the relatively slow rate of gas flow, testing performed on the sampled gas will have a correspondingly long response time. Furthermore, since the gas flow depends on convection, the sampling device must be mounted so as to provide a vertical flow path; thus only one orientation of the apparatus is possible, which is a major disadvantage in use.

The use of the Coanda effect, first patented by H. Coanda in U.S. Patent No. 2,052,869, to effect isokinetic gas flow sampling for the purpose of obtaining a gas sample to be continuously tested has heretofore been proposed in, for example, U.S. Patent No. 4,060,001. The arrangement disclosed therein utilizes a Coanda-effect device to provide flow of a gas to be sampled, the outlet of the device being arranged to induce flow of the gas into a sample probe for analysis. One disadvantage with this arrangement is that the motive gas supply, frequently air under pressure, is introduced into the gas flow to be sampled. The results of the analysis by the probe are accordingly inaccurate as the gas has been diluted by the motive gas supply. When the motive gas is air, and the gas being monitored is oxygen or nitrogen, this inaccuracy can be substantial. A further disadvantage of this arrangement is that when a contaminated gas is being monitored, despite the high flow velocities involved, particles suspended in the gas may still be deposited on the sample probe as described above with reference to the convection sampling arrangement.

In another known testing apparatus, a continuous sample of gas is withdrawn from the main gas stream by passing the main stream through a passage having a restriction and coupling a conduit containing the testing apparatus between one location in the passage upstream of the restriction and another location in the passage downstream of the restriction, the pressure differential between the two locations produced by the presence of the restriction causing a flow of gas to pass through the testing apparatus. However, the presence of a restriction in the main gas path has an undesirable effect on flow, and furthermore the ends of each conduit leading to the testing apparatus may need to project into the main stream of gas to be sampled thereby further hindering flow of the main gas path. This makes the provision of a filter in the conduit a matter of some difficulty. Furthermore, in addition to this problem, the pressure difference between the location upstream and downstream of the restriction is unlikely to be sufficient to allow gas flow through a filter.

One example of a Coanda-effect device for producing entrained flow of a working fluid in response to wall-bound flow of a driving fluid is described in U.S. Patent No. 3,795,367. These prior art devices include a narrow slit, formed between two parts held together by mating screw threads, through which a wall-bound gas flow is discharged. The exact dimensioning of this slit, and the capability of producing many devices having exactly similar performance, have required exact dimensions between widely spaced surfaces to be achieved during the production of the main components of the device. This requirement has considerably increased the cost of manufacture and has increased the difficulty of maintaining the required slit dimension if the device is at any time dismantled and re-assembled, as a difference in the force applied to the components during assembly has been found often to vary the gap size in an unacceptable manner.

## SUMMARY OF THE INVENTION

It is an object of one aspect of the invention to provide a gas sampling apparatus for testing gases which may be contaminated by particulate matter, such as flue gases, wherein clogging of the passages of the apparatus due to the presence of particulate matter in the gas being tested is greatly reduced and in many cases may be wholly avoided.

It is another object of the invention to provide a gas sampling apparatus which is suitable for mounting in any desired orientation by obviating the need for a vertical flow path.

It is a further object of the invention to provide a gas sampling apparatus which enables a relatively fast response time to be achieved by gas testing means.

It is a still further object of the invention to provide a gas sampling apparatus including a Coanda-effect device wherein gas testing is performed upstream of the device, thereby preventing dilution of the gas being sampled by the motive gas supply of the Coanda-effect device.

It is an object of a second aspect of the invention to provide a gas flow device utilizing the Coanda effect which overcomes the problem of variation in slit dimensions referred to above.

From the first-mentioned aspect, the invention provides a gas sampling apparatus comprising a sampling channel including a Coanda-effect device arranged to produce a flow of the gas to be tested through the sampling channel and, upstream of the Coanda-effect device a venturi arranged to produce a pressure differential between two locations in the channel in response to the flow of gas through the sampling channel, a testing channel inlet end connection communicating by way of a filter element with that one of said two locations of the sampling channel which in use is at the higher pressure, and a testing channel outlet connection communicating with that location of the sampling channel which in use is at the lower pressure.

From the second aspect, the invention provides a gas flow device utilizing the Coanda effect which device includes two members arranged to define a gas-discharge slit therebetween, and a spacer positioned between opposed surfaces of the two members so as to determine the size of the gas-discharge slit.

BRIEF DESCRIPTION OF THE DRAWINGS

Both aspects of the invention will now be described with reference to embodiments thereof illustrated in the accompanying drawings, in which:

Figure 1 is an axial section through a Coanda-effect device embodying an aspect of the invention;

Figure 1a is an enlarged detail section of a portion of a member of the device illustrated in Figure 1;

Figure 2 is an axial section through a gas sampling device embodying another aspect of the invention;

Figure 3 is an axial section of an alternative arrangement of part of the device shown in Figure 2; and

Figure 4 shows diagrammatically a manner of use of a gas sampling device as shown in Figure 2 in a gas monitoring system.

DESCRIPTION OF THE PREFERRED EMBODIMENTS

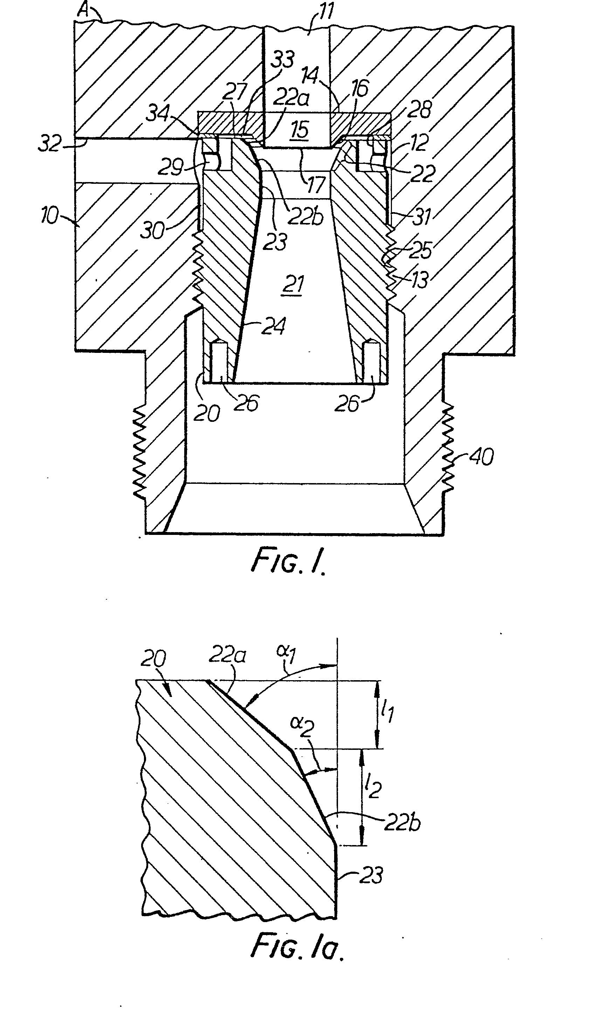

The device shown in Figure 1 comprises a body member 10 of which a part only is shown. The body member may continue in any desired form above break line A, to suit a desired individual application of the device. Body member 10 is provided with an inlet passage 11 through which a working fluid to be transported may enter the device. Passage 11 enters a counter bore 12 having near its mouth a screw-threaded portion 13. At the base of counterbore 12 is placed a disc 14 having a central bore 15 and advantageously, though not essentially, being provided with an annular projection 16 surrounding bore 15 and provided with an acutely angled edge 17 on the downstream side of the disc.

Adjacent to disc 14 in body member counterbore 12 there is provided a jet member 20 pierced axially by a throat, designated generally by reference 21 and having at the end adjacent disc 14 a conically tapering portion 22, followed by a short parallel portion 23 and then by an outwardly tapering conical nozzle portion 24. Jet member 20 is provided on its external cylindrical surface with a screw-threaded portion 25 mateable with the screw-thread in body member 11. Jet member 20 may thus be advanced towards disc member 14 by rotating it. To this end, holes 26 parallel to the axis, may be formed in the jet member adjacent to nozzle portion 24 so that a pin wrench may be used to turn the jet member 20. Other ways of facilitating the rotation of member 20 may be used if preferred.

The end 27 of jet member 20 which is adjacent to disc 14 is provided with an annular groove 28 which communicates with the outer cylindrical surface of jet member 20 through a plurality of radially disposed bores 29. The diameter of the cylindrical portion 30 of jet member 20 which extends between screw-threaded portion 25 and the end 27 is of smaller diameter than counterbore 25 and the end 27 is of smaller diameter than counter bore 12, so that there is formed around jet member 20 an annular channel 31 into which enters a radial passage 32 extending to the outer surface of body member 10, where any desired means may be used to connect passage 32 with a source of motive or driving fluid, which fluid may thus enter through channel 31 and bores 29 into groove 28 and thus with a space 33 formed between disc 14 and jet member 20 by the provision between them of a spacer such as a washer or shim 34. It will be understood that when jet member 20 is screwed into counter bore 12 the thickness of washer 34 determines the axial width of an annular jet, formed between opposed surfaces of disc 14 and jet member 20, through which the driving fluid enters the throat 21 of the device.

It is an advantage of the construction described above that exact dimensioning of the jet width is very easily obtained, since the provision of washers or shims of exact thickness is a commonplace of the art.

It is advantageous, though not essential, for the inwardly tapering portion 22 of throat 21 to be formed as shown in Figure 1a by two portions 22a, 22b formed by conical surfaces having different apical angles, the apical angle $\alpha_1$ of the portion 22a nearer to disc 14 being greater than the apical angle $\alpha_2$ of the portion 22b adjacent to parallel throat portion 23. In one specific embodiment the axial lengths and apical angles of the surface portions 22a, 22b were:

Portion 22a - length $l_1$ 6.78mm; apical angle $\alpha_1$ 50°

Portion 22b - length $l_2$ 1.18mm; apical angle $\alpha_2$ 25°

In the illustrated embodiment the downstream end of jet member 20 is surrounded by a screw-threaded tubulation 40 formed on body member 10 and serving for the connection of a discharge duct. Other means for confining the discharge of the Coanda-effect device may be used if preferred; in some applications such confinement of the discharge will be unnecessary.

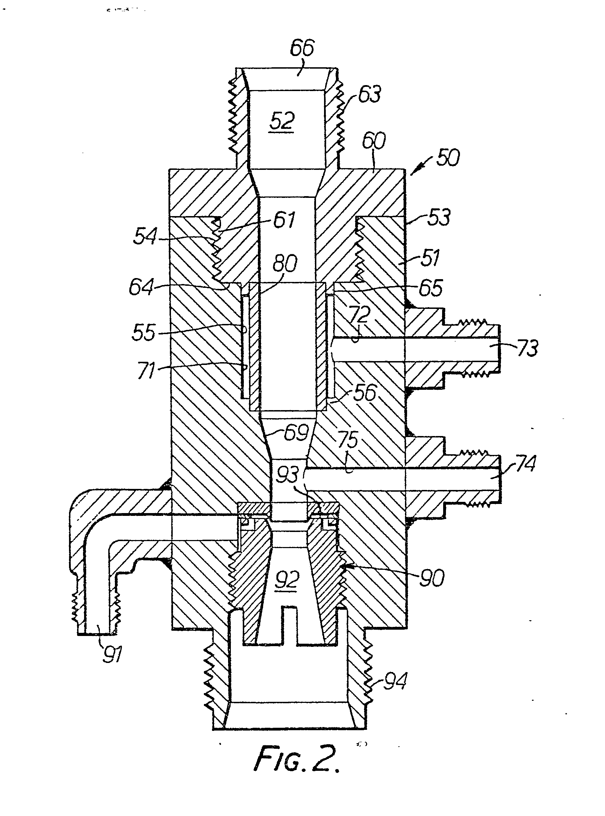

Figure 2 shows a gas sampling apparatus 50 embodying the invention. The illustrated apparatus comprises a body member 51, conveniently of generally cylindrical form and having an axial sampling passage 52 extending therethrough. At the upstream end 53 of the body member 50 there is provided an end cover 60 which is mounted on body member 51 by a screw-threaded portion 61 which engages with a corresponding screw-thread 54 provided in a counter bore in body member 51. End plate 60 is provided externally with a screw-threaded tubulation 63 or other means by which it may be coupled to an inlet pipe and the internal end 64 of end cover 60 is provided with an axially extending annular projection 65 of which the external diameter is chosen so that the projection fits snugly within a cylindrical recess 55 provided in body member 51. The internal diameter of annular projection 65 fits closely about one end of a hollow cylindrical filter element 80, the other end of which is received in an annular rebate 56 formed at the inner end of cylindrical recess 55. An inlet passage 66 extends axially through end cover 60. Beyond the end of filter element 80 the inlet passage enters a venturi element 69.

Because the external diameter of filter element 80 is less than that of the recess 55 in which it is disposed, there exists an annular passage 71 around the outside of the filter element. This passage is connected by a test passage 72 with a coupling means 73 for the inlet of a test apparatus; this coupling means is shown as being a pipe nipple, though other means may be used if preferred. A further coupling means 74 for the outlet of the test apparatus leads to a test passage 75 that enters the venturi element 69 of the sampling passage. When a gas flow is induced through the sampling passage 66 the presence of the venturi element 69 causes a pressure difference to exist between test passage 72 and test passage 75. Thus test passage 72 communicates by way of filter element 80 with a portion of sampling passage 66 that in use is at a higher pressure than that portion of the sampling passage into which test outlet passage 75 emerges, and a flow of filtered gas will pass through the test apparatus connected to couplings 73, 74. This test apparatus may, for example, be an apparatus for determining the content of one specific component of the sampled gas flow.

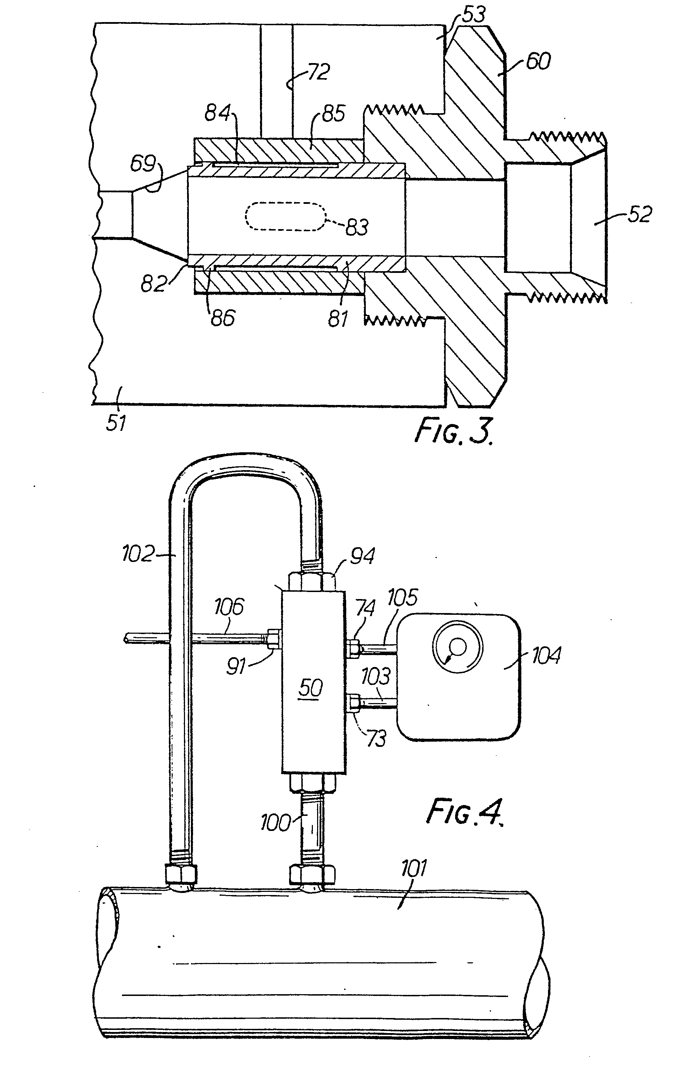

The filter element 80 is advantageously formed of sintered metal. Filters of this known kind provide extremely efficient separation of dust particles and require little cleaning. Furthermore, the arrangement of the filter element 80 as shown is self-cleaning in action, due to the velocity of sample gas passing through its centre passage. Other types of filter element may be used, as described hereafter with reference to Figure 3.

One such alternative arrangement is shown in Figure 3, like reference numerals denoting like parts of the arrangement. End plate 60 is connected to the upstream end 53 of the body member 51. The gas inlet side of the passage 72 continues with an extension 81, preferably of metal, of the gas passage. The extension 81 has the same internal diameter as the passage and is located within a corresponding chamber which includes a seat portion 82 adjacent the venturi element 69. The extension 81 is provided with one or more apertures 83 which allows the sample gas to be admitted to a cavity 84 formed between the annular extension 81 and a filter element 85 preferably of micro glass fibre. The filter element 85 is disposed on an appropriate portion 86 of the extension 81 and a seal is formed therebetween. In use, filtered gas is drawn through the test passage 72 as previously described with reference to Figure 2.

Referring back to Figure 2, downstream of test outlet passage 75, sampling passage 66 enters a Coanda-effect device 90 which is arranged to induce the necessary flow of sampled gas through the sampling passage. This Coanda-effect device is advantageously, though not wholly necessarily, a device embodying the first aspect of the invention.

In Coanda-effect device 90 a flow of driving gas provided at 91 enters a throat passage 92 of the device through an annular slit 93 and induces in known manner an entrained flow of the working fluid, in this case the sampled gas stream, through sampling passage 66 and out of the sampling apparatus through a coupling 94 or otherwise as preferred.

In use of a sampling apparatus as described with reference to Figure 2, it is arranged, for example as shown in Figure 4, that the inlet of the sampling passage of the apparatus 50 is coupled through a pipe 100 with a duct 101 such as a flue duct in which flows a gas to be sampled. The outlet end coupling 94 of the sampling passage in apparatus 50 is coupled through a pipe 102 with a different location of the duct, so that the gas sample continuously withdrawn from duct 101 is returned again to the duct. Gas from the test inlet passage passes by way of a pipe 103 coupled to coupling means 73 of apparatus 50, into a gas testing apparatus 104 which is arranged, for example to determine the oxygen content of the sampled gas stream. From testing apparatus 104 the tested gas is returned through a pipe 105 to coupling means 74 of sampling apparatus 50. A flow of driving gas is applied by way of a pipe 106 to coupling 91 of apparatus 50, so that as described with reference to Figure 2 a continuous flow of substantially dust-free gas is produced through test apparatus 104.

The pipe 102 coupled to coupling 94 of apparatus 50 may be used to return the sample flow of gas to duct 101 as shown, or to dispose of it otherwise, as may be desired.

It will be understood that the absence of obstructions in the sampling passage greatly reduces the possibility of clogging by dust deposition such as might occur with a gas contaminated by particulate matter. Additionally the filter of the described arrangement ensures that the test apparatus is not subjected to the particulate matter. The preferred disposition of the filter provides a self-cleaning effect to the surface of the filter. The use of a Coanda-effect device ensures a sufficient pressure differential across the testing inlet and outlet connections to allow the use of a filter.

Furthermore the apparatus as described may be employed in any desired orientation and does not require a vertical flow path for sampling. Also the deployment of the Coanda-effect device downstream of the testing apparatus prevents the motive gas of the device disturbing the test results.

CLAIMS:

1.      Gas sampling apparatus comprising:

gas inlet means arranged to provide entry of a gas to be tested into said apparatus;

a sampling channel coupled to said gas inlet means and including a Coanda-effect device for producing a flow of said gas to be tested through said sampling channel;

a venturi disposed within said sampling channel upstream of said Coanda-effect device;

first and second locations in said sampling channel providing a pressure differential therebetween in response to flow of said gas through said venturi, said first location in use being at a higher pressure than said second location;

testing channel inlet and outlet connections communicating with said sampling channel at said first and second locations respectively; and

a filter element disposed adjacent said testing channel inlet connection so as to filter gas passing through said testing channel inlet connection.

2.      Apparatus as claimed in claim 1 wherein said filter element is generally annular and arranged so that gas flow through said sampling channel passes substantially unobstructed through the bore of the annular filter element, gas passing through said testing channel inlet connection being filtered by said filter element.

3.      Apparatus as claimed in claim 2 wherein said sampling channel includes an enlarged chamber for housing said annular filter element, said testing channel inlet connection opening into said enlarged chamber.

4.       Apparatus as claimed in claim 3 wherein
the internal diameter of the bore of said annular
filter element substantially equals the internal diameter
of adjacent portions of said sampling channel, said
annular filter element thereby forming a continuation
of said sampling channel.

5.       Apparatus as claimed in claim 4 wherein said
filter element is formed of sintered metal.

6.       Apparatus as claimed in claim 3 wherein the
internal diameter of the bore of said annular filter
element is greater than the internal diameter of
adjacent portions of said sampling channel, said
apparatus including an extension member provided with
at least one aperture, said extension member being
positioned within the bore of said annular filter
element, said internal diameter of said metal extension
substantially equalling the internal diameter of said
adjacent portions of said sampling channel.

7.       Apparatus as claimed in claim 6 wherein said
filter element is formed of glass fibre.

8.       Apparatus as claimed in claim 1 wherein said
Coanda-effect device comprises first and second members,
each having a flow channel therethrough, said first and
second members being connected together so as to
position the respective flow channels in alignment
thereby to provide a part of said sampling channel and
so as to define a gas-discharge slit between said first
and second members which opens into said sampling
channel, a spacer positioned between opposed surfaces of
said first and second members so as to determine the
size of the gas-discharge slit, and motive gas intake means communicating with said gas-discharge slit.

9.      Apparatus as claimed in claim 8 wherein one of said opposed surfaces additionally defines one side of said gas-discharge slit, the thickness of said spacer being selected to be equal to the required width of said gas-discharge slit.

10.     Apparatus as claimed in claim 8 wherein said spacer comprises an annular washer, said opposed surfaces of said first and second members being arranged to receive said annular washer..

11.     Apparatus as claimed in claim 8 wherein the flow channel of said first member is provided with first and second tapering portions at the opening of said gas-discharge slit, said first and second tapering portions being formed by conical surfaces having different apical angles.

12.     Apparatus as claimed in claim 8 wherein said first and second members are connected together by mutually engaging screw-threaded portions provided on said first and second members, said spacer limiting the extent of threaded engagement of said first and second members.

13.     In a gas monitoring system for continuously monitoring gas flowing through a duct, the system comprising gas sampling apparatus for sampling the gas, a gas testing device for testing the sampled gas, gas inlet means connecting said duct to said gas sampling apparatus to allow flow of gas to said gas sampling apparatus, and gas outlet means connecting said gas sampling apparatus to said duct downstream of said gas inlet means thereby to return sampled gas to said duct;

the improvement wherein said gas sampling apparatus comprises:

a sampling channel coupled to said gas inlet means and including a Coanda-effect device for producing a flow of gas from said duct through said sampling channel;

a venturi disposed within said sampling channel upstream of said Coanda-effect device;

first and second locations in said sampling channel providing a pressure differential therebetween in response to flow of said gas through said venturi, said first location in use being at a higher pressure than said second location;

testing channel inlet and outlet means communicating at one end with said sampling channel at said first and second locations respectively, and at the other end with said gas testing device so as to allow flow of gas respectively to and from said gas testing device; and

a filter element disposed adjacent the connection of said testing channel inlet means with said sampling channel so as to filter gas flowing to said gas testing device.

14.     A gas monitoring system as claimed in claim 13 wherein said filter element is generally annular and arranged so that gas flow through said sampling channel passes substantially unobstructed through the bore of the annular filter element.

15.     A gas flow device utilizing the Coanda effect comprising first and second members, each having a flow channel therethrough, said first and second members being connected together so as to position the respective flow channels in alignment and so as to define a gas-discharge slit between said first and second members which opens into said aligned flow channels, a spacer positioned between opposed surfaces of said first and second members so as to determine the size of the gas-discharge slit, and motive gas intake means communicating with said gas-discharge slit.

16. A device as claimed in claim 15 wherein one of said opposed surfaces additionally defines one side of said gas-discharge slit, the thickness of said spacer being selected to be equal to the required width of said gas-discharge slit.

17. A device as claimed in claim 15 wherein said spacer comprises an annular washer, said opposed surfaces of said first and second members being arranged to receive said annular washer.

18. A device as claimed in claim 15 wherein the flow channel of said first member is provided with first and second tapering portions at the opening of said gas-discharge slit, said first and second tapering portions being formed by conical surfaces having different apical angles.

19. A device as claimed in claim 15 wherein said first and second members are connected together by mutually engaging screw-threaded portions provided on said first and second members, said spacer limiting the extent of threaded engagement of said first and second members.

0017437

1/3

FIG. I.

FIG. Ia.

FIG. 2.

FIG. 3.

FIG.4.

**EUROPEAN SEARCH REPORT**

| | DOCUMENTS CONSIDERED TO BE RELEVANT | | CLASSIFICATION OF THE APPLICATION (Int. Cl. 3) |
|---|---|---|---|
| Category | Citation of document with indication, where appropriate, of relevant passages | Relevant to claim | |
| | US - A - 3 960 500 (D.F. ROSS et al.)<br><br>* Column 3, line 17 - column 4, line 57; figure 2 *<br><br>-- | 1,13 | G 01 N 1/24 |
| | DE - A - 2 416 576 (I. KNAPP et al.)<br>* Page 8, lines 9-23; figure 5 *<br><br>-- | 2,5 | |
| | US - A - 3 870 492 (L.V. GUILD)<br>* Column 3, lines 37-38; figure 1 *<br><br>-- | 7 | TECHNICAL FIELDS SEARCHED (Int.Cl. 3)<br><br>G 01 N 1/22<br>1/24<br>33/00<br>F 15 C 1/00 |
| D,A | US - A - 4 060 001 (P.H. ARCHERD)<br>* Column 5, line 35 - column 6, line 3; figure *<br><br>-- | 1 | |
| D,A | US - A - 3 795 367 (Z.R. MOCARSKI)<br>* Column 5, line 31 - column 6, line 1; figure 1 *<br><br>-- | 1 | |
| D,A | US - A - 2 052 869 (H. COANDA)<br>* Page 1, left-hand column, line 27 - page 1, right-hand column, line 27; figures 1,2 *<br><br>-- | 1 | CATEGORY OF CITED DOCUMENTS<br><br>X: particularly relevant<br>A: technological background<br>O: non-written disclosure<br>P: intermediate document<br>T: theory or principle underlying the invention<br>E: conflicting application<br>D: document cited in the application<br>L: citation for other reasons |
| D,A | US - E - 29 209 (D.A. SAYLES)<br>* Column 1, line 52 - column 2, line 11; figures *<br><br>./.<br><br>-- | 1 | &: member of the same patent family.<br>.corresponding document |

The present search report has been drawn up for all claims

| Place of search | Date of completion of the search | Examiner |
|---|---|---|
| The Hague | 13-06-1980 | ANTHONY |

EPO Form 1503.1   06.78

0017437

| | DOCUMENTS CONSIDERED TO BE RELEVANT | | CLASSIFICATION OF THE APPLICATION (Int. Cl. 3) |
|---|---|---|---|
| Category | Citation of document with indication, where appropriate, of relevant passages | Relevant to claim | |
| A | FR - A - 2 346 707 (COMMISSARIAT A L'ENERGIE ATOMIQUE)  * Page 5, lines 17-36; page 7, line 21 - page 8, line 13; figure 2 *  ---- | 1 | |
| | | | **TECHNICAL FIELDS SEARCHED (Int. Cl. 3)** |